(19) Europäisches Patentamt

European Patent Office

Office européen des brevets

(11) **EP 0 824 121 A1**

(12) **EUROPEAN PATENT APPLICATION**
published in accordance with Art. 158(3) EPC

(43) Date of publication:
18.02.1998 Bulletin 1998/08

(51) Int. Cl.$^6$: **C08F 214/22**, C08F 214/28, C08F 214/26

(21) Application number: 95917508.4

(22) Date of filing: 02.05.1995

(86) International application number:
PCT/JP95/00870

(87) International publication number:
WO 96/34902 (07.11.1996 Gazette 1996/49)

(84) Designated Contracting States:
DE FR GB IT

(71) Applicant:
E.I. DU PONT DE NEMOURS AND COMPANY
Wilmington Delaware 19898 (US)

(72) Inventors:
• TODA, Keiichi
Oita-shi, Oita 870-01 (JP)

• HAYASHI, Kenichi
Nobeoka-shi, Miyazaki 882 (JP)
• SAITOH, Hiroshi
Chiba-shi, Chiba 264 (JP)

(74) Representative:
Matthews, Derek Peter
Frank B. Dehn & Co.,
European Patent Attorneys,
179 Queen Victoria Street
London EC4V 4EL (GB)

(54) **FLUOROELASTOMER**

(57) The fluorine-containing elastomer of this invention has a composition comprising vinylidene fluoride units and hexafluoropropylene units in a designated ratio, optionally, not more than a designated amount of tetrafluoroethylene units, and bound iodine, and has a multi-peak type molecular weight distribution and a designated inherent viscosity number, where the ratio of the amount of a low molecular weight polymer to the inherent viscosity number and the ratio of the weight-average molecular weight to number-average molecular weight are within specified ranges. When said elastomer is vulcanized, its bound iodine at a terminal thereof is eliminated and the polymer links through its terminal groups via an unsaturated compounded and is cross-linked between polymer chains by a curative thereby thoroughly being cured including a low molecular weight component to a high molecular weight component, resulting in a high strength vulcanizate which also has an excellent balance in strength and elongation; the vulcanizate, because of an improved cross-linked density, gives improved compression set as well as improved solvent resistance and chemical resistance; and it can be made into an elastomer compound having excellent processability, excellent vulcanizate properties, freedom from sticking to [mill]-rolls, good work efficiency, and excellent productivity, thereby making this a suitable material in fuel hoses and automotive engine compartment parts.

## Description

### Technical Field

The present invention relates to a novel fluorine-containing elastomer, in particular, a fluorine-containing elastomer which is used as a suitable material that requires, in particular, chemical resistance and solvent resistance such as in fuel hoses, filler hoses, valves, O-rings, and the like.

Because they have excellent heat resistance, solvent resistance, chemical resistance, and the like, fluorine-containing elastomers are extensively used in seals and diaphragms under particularly aggressive conditions such as in O-rings, oil seals, packings, gaskets, and the like.

However, some of the recent application fields have demanded superior molding processability such as extrusion processability and mold flow, and conventional fluorine-containing elastomers can no longer accommodate these demands.

In addition, conventional fluorine-containing elastomers have been deficient in that there were differences in the ease of vulcanization between the high and low molecular weight components, failing to give a uniform vulcanizate.

It is an object of this invention to provide a fluorine-containing elastomer which can be fully cured, including both low molecular weight and high molecular weight components thereof and which has good molding processability, particularly, good extrusion processability.

### Disclosure of the Invention

Extensive study by the present inventors of a way to develop a fluorine-containing elastomer with improved processability led to the finding that excellent processability is achieved if it has a specified composition and also meets conditions on a specific molecular weight distribution, and has resulted in the present invention.

That is, the present invention provides a fluorine-containing elastomer comprising (a) vinylidene fluoride units, (b) hexafluoropropylene units, optionally, (c) not more than 35% by weight of tetrafluoroethylene units, in which the ratio by weight of (a) units to (b) units is 40:60 to 80:20, said elastomer containing bound iodine and further having

(A) a multi-peak type molecular weight distribution;
(B) an inherent viscosity number of 60-130ml/g;
(C) an $M_5/[\eta]$, the ratio of ($M_5$), % by weight of a low molecular weight polymer having a molecular weight of not more than 50,000 to the inherent viscosity $[\eta]$, of 0.15-0.60; and
(D) an $M_w/M_n$, the ratio of the weight number average molecular weight ($M_w$) to number average molecular weight (Mn) of not less than 4, but less than 8.

### Brief Description of the Drawing

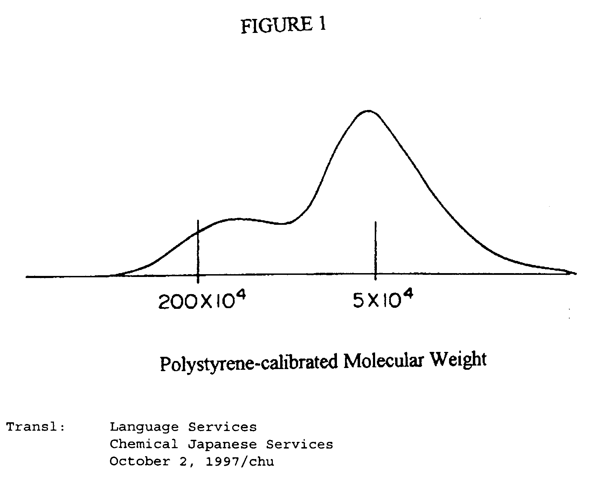

Figure 1 is a graph illustrating an example of the molecular weight distribution of a fluorine-containing elastomer of this invention.

### Best Embodiment for Carrying Out the Invention

The fluorine-containing elastomer of this invention comprises vinylidene fluoride units (hereafter abbreviated as VdF units) and hexafluoropropylene units (hereafter HFP) as essential compositional units, and optionally tetrafluoroethylene units (hereafter abbreviated as TFE units) where the ratio by weight of VdF units and HFP units must be in the range of 40:60 to j80:20. A lower amount of the VdF units than the above will substantially reduce the rate of polymerization in addition, will make it difficult to give a high molecular weight polymer while a level beyond the above range will yield a fluorine-containing elastomer which tends to be resin-like and will show decreased elasticity.

The fluorine-containing elastomer may further comprise, in addition to VdF and HFP units, TFE units, but the TFE units must be not more than 35% by weight, but preferably in the range of 5-25% by weight. A content exceeding 35% by weight will give a fluorine-containing elastomer with reduced elasticity.

The preferred ratio of VdF and HFP units in the fluorine-containing elastomer in the case of a binary fluorine-containing elastomer containing no TFE units is in the range by weight of 55:45 to 75:25; and in the case of a ternary fluorine-containing elastomer containing TFE units, the ratio should be in the range of 45:55 to 70:30. The binary fluorine-containing elastomer is used in applications requiring a low fluorine content, that is, a fluorine content not more than 65% by weight, while a ternary fluorine-containing elastomer is used in applications requiring a high fluorine content, that is, 67% by weight or higher, such as in automotive or chemical equipment parts that require oil resistance and chemical resistance.

The fluorine-containing elastomer of this invention, in addition to the above specific composition, is characterized by a specific physical property based on its molecular weight distribution. The fluorine-containing elastomer of this invention must be of a multi-peak type having two or more peaks in its molecular weight distribution. Such a multi-peak type provides not only the excellent mechanical properties based on high molecular weight components, but also good processability due to the low molecular weight component. A single-peak type, that is, an elastomer having a single-peak in its molecular weight distribution cannot provide satisfactory mechanical physical properties and processability at the same time.

The fluorine-containing elastomer of this invention must have an inherent viscosity number of 60 to 130ml/g, preferably 70-120ml/g; and a $M_5/[\eta]$, the ratio of ($M_5$) representing % by weight of a low molecular weight polymer having a molecular weight of not more than 50,000 to the inherent viscosity number $[\eta]$ in the range of 0.15-0.60, preferably 0.20-0.50; and a $M_w/M_n$ the ratio of weight average molecular weight ($M_w$) and number average molecular weight of not less than 4, but less than 8.

The above inherent viscosity number $[\eta]$ is an indication of molecular weight and a level less than 60ml/g means a polymer too sticky during mill-roll mixing to allow good handling while a level exceeding 130 ml/g will mean too high a molecular weight, which results in reduced flow and failure to extrude.

A ratio $M_5/[\eta]$ less than 0.5 will mean reduced extrudability and low extrusion rates, and inferior extrudate surface. A level exceeding 0.60 will mean reduced green strength, resulting in a change in shape in extrusion, a cause for a vulcanizate with reduced mechanical strength.

It is necessary for the fluorine-containing elastomer of this invention to contain iodine bound to its molecular chain. The iodine during vulcanization is readily eliminated to generate a radical on the polymer chain and the radical acts as a cross-link site, resulting in the formation of cross-links. Since iodine is easily eliminated compared to other halogens such as bromine, it shortens the vulcanization time in such a polymer compared to a bromine-bound polymer, resulting in a higher degree of cure state and a vulcanizate with excellent physical properties.

Processes are known whereby iodine is introduced into a polymer chain such as the methods of copolymerizing an iodine-containing vinyl compound and of polymerizing in the presence of an iodine compound as a chain transfer agent, but the latter is advantageous for the present invention; for example, iodine can be readily incorporated into molecular chain terminals using the methods described in Kokai S53-125491 and S60-221409. Suitable chain transfer agents which may be used include, for example, monoiodomethane, 1-iodomethane, 1-iodo n-propane, isopropyl iodide, diiodomethane, 1, 2-diiodoethane, 1,3-diiodo-n-propane, as well as perfluoroiodo compounds in which all of the hydrogen atoms in these preceding compounds have been substituted by fluorine atoms. The iodine content in the polymer is selected normally from the range of 0.01-5% by weight, preferably 0.1-2.5% by weight of the total amount of the VdF units, HFP units, TFE units, and iodine. An amount of the iodine less than 0.01% by weight will give too long a distance between the cross-linked sites, resulting in insufficient cross-linking, making it difficult to give a vulcanizate with satisfactory physical properties, while a level exceeding 5% by weight will give too short a distance between the cross-link sites, making it difficult to obtain a highly satisfactorily elastic product.

The multi-peak type fluorine-containing elastomer of this invention may be manufactured, for example, by blending separately manufactured high molecular weight and low molecular weight polymers. However, it is more advantageous to polymerize by a suspension polymerization method in which a chain transfer agent is added during the polymerization in that it gives a polymer having a multi-peak type molecular weight distribution with relatively narrow peaks. In such a case, a high molecular weight polymer having a peak in the high molecular weight side is produced first, followed by adding a chain transfer agent and optionally, a polymerization catalyst to give a low molecular weight polymer having a peak on the low molecular weight side. The chain transfer agent to be used should be chosen from the aforementioned iodine compounds.

A suitable example for the suspension polymerization is described, which calls for first dispersing in a aqueous medium an inert organic solvent in which the desired mixed monomers (feed monomers) are dissolved, followed by further adding a suspension stabilizer, an oil-soluble catalyst, optionally one of the aforementioned chains transfer agent, mechanically stirring at a temperature held at 50-60°C with a fresh addition of the aforementioned mixed monomer (incrementally added monomers) to maintain the pressure constant in the range of 5-17kg/cm$^2$ · G to allow the polymerization to proceed. The composition of the monomer units in the fluorine-containing elastomer generated may be determined by the relationship between the feed monomer composition and incrementally added monomer composition. Incidentally, the feed monomer composition and incrementally added monomer composition are determined by gas chromatography; and the composition of monomer units in a fluorine-containing elastomer is determined by $^{19}$F-NMR using a solution of the elastomer in acetone. The molecular weight distribution is adjusted and iodine introduced by adding the aforementioned chain transfer agent during the polymerization.

The inert organic solvent which is used in the suspension polymerization is an organic solvent free of carbon-hydrogen bonds which tend to cause a radical chain transfer, where 1,1,2-trichloro-1,2,2-trifluoroethane is preferred in terms of performance and economics. The preferred suspension stabilizer is methyl cellulose. The preferred oil soluble catalyst is a dialkylperoxy dicarbonate such as diisopropylperoxy dicarbonate, because it has a high decomposition temperature. The elastomer of this invention is vulcanized normally by a polyol cure, polyamine cure, peroxide cure. The polyol curatives include, for example, a polyhydroxy aromatic compound as a cross-linking agent and at least one type selected from ammonium, phosphonium, and iminium salts as a cure accelerator, and at least one type of acid acceptor selected from divalent metal oxides and divalent metal hydroxides.

Said polyhydroxy aromatic compounds such as hydroquinone, 2,2-bis(4-hydroxyphenyl) propane (bisphenol A), 2,2-bis(4-hydroxyphenyl)perfluoro propane (bisphenol AF), 4,4'-dihydroxy biphenyl methane, 2,2-bis 4-hydroxyl phenyl butane, and the like, may be used, normally at a level of 0.1-10 parts by weight, preferably 0.6-5 parts by weight per 100 parts by weight of fluorine-containing elastomer. These polyhydroxy aromatic compounds may be used alone or as a combination of two or more.

The ammonium salts, phosphonium salts and iminium salts suitably include, for example, tetramethylammonium chloride, tetraethylammonium fluoride, tetraypropylammonium chloride, tetrabutylammonium chloride, tetrabutylammonium bromide, bis(benzyldiphenyl phosphin)iminium chloride, tetrabutylphosphonium chloride, benzyltriphenylphosphonium chloride, benzyltrioctylphosphonium chloride, and the like, usually in an amount of 0.05-2 parts by weight, preferably 0.1-1 part by weight per 100 parts by weight of a fluorine-containing elastomer. These may be used alone or in a combination of two or more.

The divalent metal oxides or metal hydroxides used are, for example, oxides or hydroxides of magnesium, calcium, zinc, lead, and the like, in an amount selected from the range of 1-30 parts by weight, preferably 2-20 parts by weight per 100 parts by weight of fluorine-containing elastomer.

Optionally, in order to increase the effect of the vulcanization accelerator, a variety of vulcanization accelerator activators may be added. Such chemical vulcanization accelerator activators include sulfone compounds such as dimethylsulfone and dichlorodiphenylsulfone.

The polyamine curatives used are, for example, a combination of a polyamine compound as a cross-linker and a divalent metal oxide acid acceptor. The polyamine compounds such as hexamethylenediamine carbonate, N,N'-dicinnamylidene-1,6-hexamethylenediamine, 4,4'-bis(aminocyclohexyl) methanecarbamate, in an amount normally from 0.1 to 10 parts by weight, preferably 0.5-5 parts by weight per 100 parts by weight of a fluorine-containing elastomer. The polyamine compounds may be used alone or in combination of two or more. The divalent metal oxides used include, for example, an oxide of magnesium, calcium, zinc, lead, or the like, in an amount normally selected from the range of 1-30 parts by weight, preferably 5-20 parts by weight per 100 parts by weight of fluorine-containing elastomer. These may be used alone or in a combination of two or more.

When a polyol curative and a polyamine curative are used together, it is preferred to compound, per 100 parts by weight of fluorine-containing elastomer, 0.1-5 parts by weight of a polyhydroxy aromatic compound, 0.05-2 parts by weight of a salt selected from an ammonium, phosphonium, and iminium salt, 0.1-5 parts by weight of a polyamine compound, 1-40 parts by weight of a compound selected from divalent metal oxides and divalent metal hydroxides.

Organic peroxides preferably used as peroxide vulcanization compounding agents are those which readily generate peroxy radicals on heating, such as 2,5-dimethyl-2,5-di(t-butylperoxy)hexyne-3, 2,5-dimethyl-2,5-di(t-butylperoxy)hexane or like dialkyl peroxides.

It is postulated that these organic peroxides during curing thermally generates radicals which act on the iodine of the polymer to generate radicals in the polymer; and the two radicals of the polymer couple to cross-link.

One, two or more types in combination of said organic peroxides may be used in a suitably selected amount, depending upon their active oxygen content and decomposition temperatures and so on, normally being selected from the range of 0.05-10 parts by weight, preferably 0.05-5 parts by weight per 100 parts by weight of fluorine-containing elastomer. A level less than 0.05 parts by weight will generate too few radicals to allow cross-linking to take place satisfactorily while a level exceeding 10 parts does not show any proportional effectiveness and is rather economically disadvantageous, and the decomposition gas generated will cause a sponge formation with a tendency to reduce the mechanical properties. In order to further effectively carry out the cross-linking reaction, it is more advantageous to use a polyfunctional unsaturated compound, where polyfunctional unsaturated compounds such as triallyl cyanurate, triallyl isocyanurate, tris(diallylamine)-s-triazine, and the like are useful; in particular triallyl isocyanurate is preferred. These polyfunctional unsaturated compounds may be used alone or in a combination of two or more in an amount selected from the range of usually 0.01-10 parts by weight, preferably 0.1-5 parts by weight per 100 parts by weight of the elastomer.

In order to particularly improve on against the formation of cracks when immersed in solvents, so-called solvent cracks, it is preferred to compound 0.05-0.6 parts by weight, preferably 0.05-0.4 parts by weight of the organic peroxide, 0.01-1.5 parts by weight, preferably 0.01-1.0 parts by weight of the polyfunctional unsaturated compound. The amount of the polyhydroxy aromatic compound to be compounded is 0.5-3 parts by weight, preferably 1.0-2.5 parts by weight; and that of a salt selected from an ammonium, phosphonium, and iminium salt is 0.1-1.0 parts by weight, preferably 0.2-0.75 parts by weight.

Optionally, one may add additives such as reinforcing agents such as carbon black, silica, clay, talc, and process aides such as wax, and the like. Compositions containing a fluorine-containing elastomer of this invention can be prepared by mixing and milling said elastomer and the aforementioned vulcanization compounding agents along with an optional additive component using mill-rolls or a Banbury mixer or the like.

The resultant composition after thorough mixing, is sheeted out and processed by an extruder into tubes or noncircular cross-sectional rod products. The composition can also be shaped by injection molding, press [compression]molding, calendaring, and the like. Then optionally, a post-cure may be carried out to obtain the desired vulcanizate.

Use of a fluorine-containing elastomer having a certain limited molecular weight distribution in this invention can give an elastomer compound having excellent process characteristics, particularly extrusion processability and vulcanizate properties with no roll sticking and perform at very high working efficiency and excellent productivity. Use of an elastomer comprising at least two peaks corresponding to a low molecular weight component and a high molecular component and containing iodine at least in the low molecular weight component can give a compound which maintains excellent vulcanizate physical properties by the high molecular weight component and excellent processability by the low molecular weight component. Since the low molecular weight component is bound together during vulcanization via iodine in the molecule, it will not reduce vulcanizate properties. The vulcanizate resist the extraction of its low molecular weight components when immersed in solvents or fuel oil thereby showing excellent solvent resistance.

Therefore, the fluorine-containing elastomer of this invention is suitably used in parts such as fuel hoses or automotive engine compartment parts which require heat resistance, solvent resistance, and resistance to fuel oil as well as in parts or parts-materials which are continuously processed by extrusion or which are difficult to process due to their complex shapes. The elastomer is also suitably used as a molding material for injection molding, calendaring, compression molding, and the like.

The present invention is further described in detail by the following examples which in no way limit the scope of this invention. The fluorine-containing elastomers in these examples were tested for their elastomer physical properties, vulcanizate properties, and processability using the following methods.

(1) Inherent viscosity: a sample dissolved in methylethylketone to a solution concentration of 0.1g/100ml was prepared and measured using a capillary viscometer at 35°C.

(2) Molecular weight distribution: this was measured using an LC-3A liquid chromatograph instrument, manufactured by Shimadzu Seisakusho KK equipped with 2 KF-80M columns made by Showa Denko KK, a KF-800P precolumn, an ERC-7510S detector, manufactured by Eruma Kogaku KK, and an integrator 7000A, made by System Instruments Company, using tetrahydrofuran as an eluting solvent at a [polymer] concentration of 0.1% by weight and a temperature of 35°C.

A series of monodispersed polystyrenes, manufactured by Toyo Soda KK [$M_w/M_n$=1.2(max)] was used as molecular weight calibration standards polymers.

(3) The presence of iodine in polymer: the polymer dissolved in acetone was analyzed by a fluorescent x-ray method.

(4) Vulcanizate mechanical properties: designated components were mixed and rolled-milled to give a fluorine-containing elastomer composition, which was then filled in a mold, press-heated, removed from the mold, and oven cured to prepare a 2mm-thick vulcanized sheet. A # 3 dumbbell type test piece was punched out from the sheet, on which mechanical physical properties were measured according to JIS-K6301 using a tensile tester [manufactured by Toyo Seiki KK]at the rate of separation of 50cm/min.

(5) Roll thickness: a raw elastomer or compounded elastomer composition was banded around a 6-inch mill roll and the stickiness was evaluated in terms of ease of peeling off the roll.

(6) Hardness: measured according to JIS-K6301 using a spring hardness gauge A type.

(7) Extrudability: this was evaluated in terms of extrudate surface and extrusion rate by extruding the compound using a Bravender Co. extruder 10DW model (D=19.1mm, L/D=10) and a tube die (OD 9mm, ID 8mm) at a screw temperature of 60°C, head temperature of 100°C, and rate of screw revolution at 50rpm.

The extrudate surface was visually rated in terms of surface fineness using a 5-grade rating scale from 5 for excellent to 1 for poor. The extrusion rate was calculated in terms of extruded length per unit time with die swell calculated according to equations 1 and 2 from tube OD and tube thickness.

$$OD\ Die\ swell\ = \frac{(TubeOD)-(DieOD)}{(DieOD)}X\ 100\ (\%)$$

$$Thickness\ swell\ = \frac{(TubeThickness)-(DieClearance)}{(DieClearance)}X\ 100\ (\%)$$

Example 1

An autoclave with an internal volume of about 50 l equipped with an electromagnetic-induction stirrer was thoroughly purged with nitrogen gas and repeatedly evacuated and filled with nitrogen three times, nitrogen-purged, and fed at reduced pressure with 23.63kg of deoxygenated pure water, 2.96 l of 1,1,2-trichloro-1,2,2-trifluoroethane (hereafter Flon 113) and 23.6g of methyl cellulose (viscosity 50cp) as a suspension stabilizer, and then stirred at 476rpm and held at a temperature of 50°C. This was followed by charging a feed gas of a mixed monomer consisting of 14.6% by weight of vinylidene fluoride, 79.1% by weight of hexafluoropropylene, 6.3% by weight of tetrafluoroethylene until a pressure of 15kg/cm$^2$ G was reached.

Then, 0.2g of diiodomethane was charged, followed by adding 115.6g of a Flon 113 solution containing 20.1% by weight of diisopropyl peroxy dicarbonate to initiate polymerization. As the polymerization reaction progressed, the pressure began to decrease until reaching the pressure of 14.5kg/cm$^2$ G, when a mixed monomer consisting of 43.7% by weight of vinylidene fluoride, 29.3% by weight of hexafluoropropylene, and 27.0% by weight of tetrafluoroethylene was added as an incrementally added gas component to bring the pressure back to 15kg/cm$^2$ · G. Such an operation was repeated to carry out the polymerization reaction.

2.9 hours after the start of polymerization, 61.0g of diiodomethane was added to carry out a further reaction for 4.9 hours under a pressure of 14.5-15.0kg/cm$^2$ G to a total polymerization time of 7.8 hours. After the completion of the polymerization reaction, the remaining mix monomer was purged off and the resultant suspension was de-watered by a centrifuge, thoroughly water washed, vacuum dried at 100°C to give about 9.8kg of an elastomer. The resultant fluorine-containing elastomer was analyzed by $^{19}$F-NMR, which indicated a composition of 43.9% by weight of VdF units, 29.9% by weight of HFP units, and 26.2% by weight of TFE units.

The elastomer had an [η] of 78ml/g and gave a molecular weight distribution with a 2-peak type shape as charted in Figure 1; it had an Mn of 3.6 x 10$^4$, Mw/Mn of 6.2, M$_5$ of 38.9% by weight; and Ms/[η] of 0.50.

Example 2-5 and Comparative Example 1

Polymerizations were carried out in a manner similar to that of Example 1 except for using the polymerization conditions given in Table 1 to prepare fluorine-containing elastomers. The polymerization initiator was added after dilution to a 20% by weight concentration with Flon R113.

**Table 1**

| | Internal Vol. Autoclave (l) | Stirrer Revolutions (rpm) | Polymerization Pressure (kg/cm²G) | Pure Water Fed (l) | Flon Fed (l) | Methyl Cellulose (g) | Feed Composition VdF/HFP/TFE (wt%) | Incrementally Added Composition VdF/HFP/TFE (wt%) | Amt. of Initiator (g) | Diiodomethane Amount Added (g) Initial | Diiodomethane Amount Added (g) Incremental | Diiodomethane Time of Addition Initial | Diiodomethane Time of Addition Incremental | Total Polymerization Time (hr) | Elastomer Wt. (kg) |
|---|---|---|---|---|---|---|---|---|---|---|---|---|---|---|---|
| Ex.2 | 50 | 480 | 14.5-15 | 23.63 | 2.96 | 23.6 | 14.6/79.1/6.3 | 43.7/29.3/27.0 | 23.12 | 0.5 | 70.0 | Start | 3.3hr later | 8.2 | 16.5 |
| Ex.3 | 15 | 600 | 14.5-15 | 5.44 | 0.68 | 5.4 | 14.6/79.1/6.3 | 43.7/29.3/27.0 | 2.67 | 0 | 13.3 | - | 6.5hr later | 17.8 | 3.7 |
| Ex.4 | 15 | 600 | 14.5-15 | 5.44 | 0.68 | 5.4 | 14.6/79.1/6.3 | 43.7/29.3/27.0 | 5.39 | 0 | 22.7 | - | 4.2hr later | 11.3 | 4.1 |
| Ex.5 | 15 | 500 | 14.5-15 | 5.44 | 0.68 | 5.4 | 14.6/79.1/6.3 | 43.7/29.3/27.0 | 5.39 | 0 | 10.0 | - | 6.8hr later | 6.8 | 3.2 |
| Comp.Ex.1 | 50 | 480 | 14.5-15 | 23.63 | 2.96 | 23.6 | 14.6/79.1/6.3 | 43.7/29.3/27.0 | 23.12 | 126.3 | 0 | Start | - | 19.5 | 29.7 |

Table 2 shows the physical properties of the resultant fluorine-containing elastomers. Table 2 also shows the physical properties of a commercial product Florel [phonetically translated] FT-2320 (Sumitomo 3M KK) as Comparative Example 2.

Table 2

| | Polymer Composition VdF/HFP/TFE (wt%) | [η] (ml/g) | Mn (x 10$^4$) | Mw/Mn | M$_5$ (wt%) | Ms/[η] | Shape of Molecular Weight Distribution | Presence of Iodine |
|---|---|---|---|---|---|---|---|---|
| Ex.2 | 43.1/30.6/26.2 | 80 | 5.0 | 5.0 | 28.3 | 0.35 | 2 Peaks | Yes |
| Ex.3 | 42.7/30.6/26.7 | 118 | 5.8 | 7.8 | 25.9 | 0.22 | 2 Peaks | Yes |
| Ex.4 | 43.5/30.4/26.1 | 78 | 3.8 | 6.3 | 35.4 | 0.46 | 2 Peaks | Yes |
| Ex.5 | 43.7/30.5/25.8 | 116 | 6.1 | 6.3 | 22.8 | 0.20 | 2 Peaks | Yes |
| Comp.Ex.1 | 43.3/29.7/27.0 | 53 | 4.3 | 2.2 | 30.0 | 0.57 | 1 Peak | Yes |
| Comp.Ex.2 | 45.2/29.6/25.2 | 65 | 5.3 | 4.6 | 23.2 | 0.36 | 1 Peak | None |

Extrusion rates, extrudate surface, and mill-roll stickiness were evaluated on milled compositions obtained from 100 parts by weight of elastomers from Examples 1-5 and Comparative Example 1, along with 12 parts by weight of SRF carbon [Asahi Carbon KK "Seast S"], 6 parts by weight of Ca(OH)$_2$ [Kindai Kagaku Kogyo KK "Karubitto"], 3 parts by weight of MgO (I) [Kyowa Kagaku Kogyo KK "Kyowamagu #150"], 2 parts by weight of bisphenol AF, 0.5 parts by weight of bis(benzyldiphenylphosphin)iminium chloride, 0.5 parts by weight of 2,5-dimethyl-2,5-di(t-butyl peroxy)hexane [Nippon Yushi KK "Perhexa 25B-40" purity 40%] and 0.5 parts by weight of triallyl isocyanurate.

Vulcanizate sheets obtained by press curing the above compound at 155°C for 70 minutes and oven curing 3 hours at 180°C were subjected to a tensile test. These results are given in Table 3.

Reference Example 3

Table 3 shows the physical properties of a vulcanizate sheet obtained by curing under conditions identical to Reference Examples 1 and 2 except for compounding 100 parts by weight of the fluorine-containing elastomer of Comparative Example 2 with 15 parts by weight of SRF carbon [Asahi Carbon KK, "Seast S"], 6 parts by weight of Ca(OH)$_2$ [Kindai Kagaku Kogyo KK "Karubitto"], and 3 parts by weight of MgO (I) [Kyowa Kagaku Kogyo KK., "Kyowamagu #150"].

Table 3

| Reference Examples | Elastomer Used | Extrusion Rate (cm/min) | Extrudate Surface | Tensile at the Break (kg/cm$^2$) | Elongation (%) | 100% Modulus (kg/cm$^2$) | Hardness (JIS-A) | Mill-Roll Stickiness |
|---|---|---|---|---|---|---|---|---|
| 1 | Example 4 | 65 | 3.5 | 162 | 280 | 53 | 79 | None |
| 2 | Example 5 | 42 | 3.5 | 170 | 300 | 38 | 81 | None |
| 3 | Example 2 | 50 | 2 | 169 | 277 | 54 | 87 | Yes |

The table clearly shows that the fluorine-containing elastomers obtained in the examples of this invention do not stick to rolls and are more easily millable compared to the comparative example.

**Claims**

1. A fluorine-containing elastomer comprising (a) vinylidene fluoride units, (b) hexafluoropropylene units, optionally, (c) not more than 35% by weight of tetrafluoroethylene units, in which the ratio by weight of (a) units to (b) units is 40:60 to 80:20, said elastomer containing bound iodine and further having

(A) a multi-peak type molecular weight distribution;
(B) an inherent viscosity number of 60-130ml/g;
(C) an M$_5$/[η], the ratio of (M$_5$), % by weight of a low molecular weight polymer having a molecular weight of not more than 50,000 to the inherent viscosity [$\eta$], of 0.15-0.60; and

(D) an $M_w/M_n$, the ratio of the weight number average molecular weight ($M_w$) to number average molecular weight (Mn), of not less than 4, but less than 8.

FIGURE 1

$200 \times 10^4$    $5 \times 10^4$

Polystyrene-calibrated Molecular Weight

Transl:    Language Services
           Chemical Japanese Services
           October 2, 1997/chu

## INTERNATIONAL SEARCH REPORT

| | International application No. |
|---|---|
| | PCT/JP95/00870 |

**A. CLASSIFICATION OF SUBJECT MATTER**

Int. Cl⁶ C08F214/22, C08F214/28, C08F214/26

According to International Patent Classification (IPC) or to both national classification and IPC

**B. FIELDS SEARCHED**

Minimum documentation searched (classification system followed by classification symbols)

Int. Cl⁶ C08F214/00-214/28

Documentation searched other than minimum documentation to the extent that such documents are included in the fields searched

| | |
|---|---|
| Jitsuyo Shinan Koho | 1926 - 1995 |
| Kokai Jitsuyo Shinan Koho | 1971 - 1995 |
| Toroku Jitsuyo Shinan Koho | 1994 - 1995 |

Electronic data base consulted during the international search (name of data base and, where practicable, search terms used)

WPI/L

**C. DOCUMENTS CONSIDERED TO BE RELEVANT**

| Category* | Citation of document, with indication, where appropriate, of the relevant passages | Relevant to claim No. |
|---|---|---|
| X | JP, 4-258614, A (Asahi Chemical Industry Co., Ltd.), September 14, 1992 (14. 09. 92), Claim (Family: none) | 1 |
| X | JP, 6-279548, A (Asahi Chemical Industry Co., Ltd.), October 4, 1994 (04. 10. 94), Claim & EP, 434046, A1 & US, 5218026, A | 1 |
| A | JP, 2-124910, A (Asahi Chemical Industry Co., Ltd.), May 14, 1990 (14. 05. 90), Claim & US, 4985520, A & EP, 353636, B | 1 |
| A | JP, 64-40509, A (Asahi Chemical Industry Co., Ltd.), February 10, 1989 (10. 02. 89), Claim (Family: none) | 1 |

☐ Further documents are listed in the continuation of Box C.     ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | |
| "O" document referring to an oral disclosure, use, exhibition or other means | "Y" document of particular relevance; the claimed invention cannot be considered to involve an inventive step when the document is combined with one or more other such documents, such combination being obvious to a person skilled in the art |
| "P" document published prior to the international filing date but later than the priority date claimed | "&" document member of the same patent family |

| Date of the actual completion of the international search | Date of mailing of the international search report |
|---|---|
| July 24, 1995 (24. 07. 95) | August 15, 1995 (15. 08. 95) |

| Name and mailing address of the ISA/ | Authorized officer |
|---|---|
| Japanese Patent Office | |
| Facsimile No. | Telephone No. |

Form PCT/ISA/210 (second sheet) (July 1992)